# EUROPEAN PATENT SPECIFICATION

(11) **EP 3 145 118 B1**
(45) Date of publication and mention of the grant of the patent: **20.03.2019**
(21) Application number: 14894462.2
(22) Date of filing: 15.10.2014
(51) Int. Cl.: H04L 12/10, H04L 1/22, H04L 12/28

(54) **LINK BACKUP AND POWER SOURCE BACKUP METHOD, DEVICE AND SYSTEM, AND STORAGE MEDIUM**
VERBINDUNGSSICHERUNG UND STROMQUELLENSICHERUNGSVERFAHREN, VORRICHTUNG UND SYSTEM SOWIE SPEICHERMEDIUM
PROCÉDÉ, DISPOSITIF ET SYSTÈME DE SECOURS DE LIAISON ET DE SECOURS DE SOURCE D'ALIMENTATION, ET SUPPORT D'INFORMATIONS

(30) Priority: 09.06.2014 CN 201410252290
(43) Date of publication of application: 22.03.2017
(73) Proprietor: ZTE Corporation, Shenzhen, Guangdong 518057 (CN)
(72) Inventor: ZHANG, Qiujie, Shenzhen Guangdong 518057 (CN)
(74) Representative: Regimbeau
(86) International application number: PCT/CN2014/088687
(87) International publication number: WO 2015/188553

(56) References cited:
- CN-A- 101 436 883
- CN-A- 101 710 860
- CN-A- 102 074 998
- CN-A- 102 497 276
- CN-A- 102 545 962
- CN-A- 103 152 183
- US-A1- 2009 217 062
- US-A1- 2013 003 696

## Description

### TECHNICAL FIELD

The present disclosure relates to the field of communications, and more particularly to a link backup and power source backup method, device and system, and related computer storage medium.

### BACKGROUND

With rapid development of communication technologies, broadband over power line communication has been widely applied, during which signal transmission is realized by utilizing an existing power grid so as to use a power line as a novel information transmission medium. Ethernet transmission has grown considerably, and may provide a power source while transmitting signals; and one of Ethernet technologies widely applied in recent years is active power over Ethernet (POE).

Broadband over power lines (BPL) is a technology that allows data to be transmitted over power lines, which can effectively reduce cabling costs. People often refer to the BPL as power line communication (PLC).

POE refers to a technology that direct-current power-supplying can be provided to some IP-based terminals such as Internet Protocol (IP) telephones, wireless local area network access points (AP), network cameras and the like while a data signal is transmitted to such a kind of devices when no change is made to an existing Ethernet Cat.5 cabling infrastructure. The POE technology can ensure normal operation of an existing network while ensuring existing structured cabling security, thereby reducing costs to the most extend.

In short, an BPL technology is to use the power line as a communication link, and the power line may transmit the data signal while supplying power; the POE technology is to provide power on an Ethernet link, that is, a data link may supply power to a device.

In order to ensure reliable transmission of a link, a system currently applied in Ethernet transmission would generally have a system backup protection; when a normal transmission link is disconnected, a protection (backup) link may work, so that the system can carry out normal transmission. A traditional backup protection requires two sets of POE devices and transmission links to complete data link backup and power source backup respectively, which is not conducive to cost saving and green energy saving. Further relevant technologies are also known from US 2013/003696 A1 which relates to a device handing over communication session from wireless communication to powerline communication, and CN 101 436 883 A which relates to an electric power modem.

With respect to a problem that a traditional backup protection scheme is not conducive to cost saving and green energy saving, no effective solution has been put forward currently.

### SUMMARY

With respect to a problem that a traditional backup protection scheme is not conducive to cost saving and green energy saving, the present invention provides a link backup method according to claim 1, a link backup device according to claim 4 and a related computer storage medium according to claim 7, to address the above technical problem. Claims 2 and 3 concern embodiments of the link backup method. Claims 5 and 6 concern embodiments of the link backup device.

Embodiments of the present invention provide a brand new solution of power source and data link backup protection, addressing a problem that a traditional backup protection scheme in the related art is not conducive to cost saving and green energy saving. Power may be supplied through POE when backed up.

Advantageous effects of embodiments of the present invention are mainly as follows: Firstly, costs can be saved since a traditional backup protection system needs to be accomplished by two sets of devices while a backup function can be accomplished by only one set of device by utilizing embodiments of the present invention; secondly, green energy saving and environmental protection are facilitated since, obviously, energy consumption of one set of device is smaller than that of two sets of devices; and finally, it is easy to implement without re-constructing a line and other infrastructures, so that costs are saved.

The above description is merely an outline of the technical solution of the present disclosure. In order that the technical means of the present disclosure may be more clearly understood, it may be practiced in accordance with the content of the specification. In order to make the foregoing and other objects, features and advantages of the present disclosure become more apparent, the following especially describes the detailed description of the present disclosure.

### BRIEF DESCRIPTION OF DRAWINGS

FIG. 1 is a flow diagram illustrating a link backup method according to an embodiment of the present invention;
FIG. 2 is a flow diagram illustrating a power source backup method according to an embodiment of the present invention;
FIG. 3 is a block diagram illustrating a structure of a link backup device according to an embodiment of the present invention;
FIG. 4 is a block diagram illustrating a structure of a power source backup device according to an embodiment of the present invention;
FIG. 5 is a block diagram illustrating a structure of a link and power source backup system based on an BPL technology and POE technology according to an embodiment of the present invention;
FIG. 6 is a schematic diagram illustrating a particular structure of a link and power source backup system based on an BPL technology and POE technology according to an embodiment of the present invention;
FIG. 7 is a schematic diagram illustrating realizing a link backup scheme according to an embodiment of the present invention;
FIG. 8 is a schematic diagram illustrating realizing a power source backup scheme according to an embodiment of the present invention; and
FIG. 9 is a schematic diagram illustrating realizing a power source and link simultaneous backup scheme according to an embodiment of the present invention.

### DETAILED DESCRIPTION

In order to solve a problem that a traditional backup protection scheme in the related art is not conducive to cost saving and green energy saving, embodiments of the present invention provide a link backup and power source backup method, device and system and related computer storage medium. Embodiments of the present invention will be illustrated further below in conjunction with accompanying drawings and embodiments. It should be understood that the particular embodiments described here are merely used for explaining the present disclosure, and are not intended to limit the present disclosure.

Embodiments of the present invention apply an BPL technology and POE technology to one set of device system; and when the BPL technology is utilized to realize the data transmission on a power line, the power line may server as a backup link of Ethernet data transmission. Meanwhile, by utilizing a case that the POE technology has a function of providing a power source, backup protection of a power source of a device is realized, that is, backup protection of the power source and a data transmission link can be realized by applying the BPL technology and POE technology to one set of device. The following description will be introduced below with reference to particular embodiments.

The present embodiment provides a link backup method, during which an Ethernet message is transmitted through an POE transmission link. When the POE transmission link is abnormal, the Ethernet message is backed up to an BPL link, through which a data signal is transmitted; where the BPL link allows data to be transmitted on the power line.

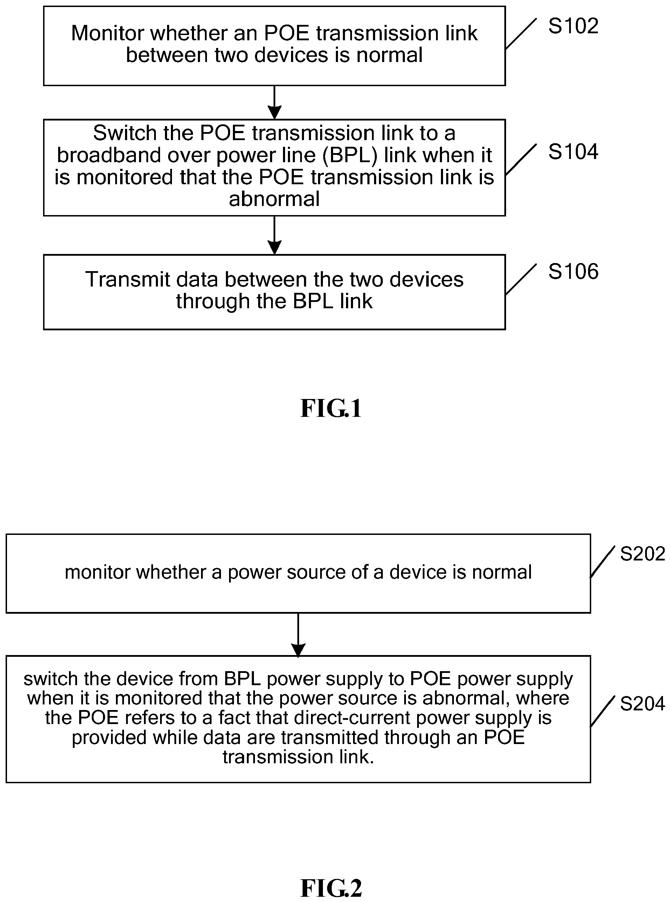

FIG. 1 is a flow diagram illustrating a link backup method according to an embodiment of the present invention. As shown in FIG. 1, the method includes following steps (Step S102 to Step S106).

In step S102, whether an POE transmission link between two devices is normal is monitored.

In step S104, the POE transmission link is switched to an BPL link when it is monitored that the POE transmission link is abnormal.

In step S106, data between the two devices are transmitted through the BPL link.

The present embodiment solves a problem that a traditional backup protection scheme in the related art is not conducive to cost saving and green energy saving. Power can be supplied through POE when being backed up. This power supply needs to be within a power range of POE power supply, and an existing technology can realize POE power supply within 100 W (certainly, the previously-described 100 W is limited by the existing technology, a development power of a subsequent technology may increase, and no certain particular power is limited here). Advantageous effects of the present embodiment are mainly as follows: Firstly, costs can be saved since a traditional backup protection system needs to be accomplished by two sets of devices while a backup function can be accomplished by only one set of device by utilizing embodiments of the present invention; secondly, green energy saving and environmental protection are facilitated since, obviously, energy consumption of one set of device is smaller than that of two sets of devices; and finally, it is easy to implement without re-constructing a line and other infrastructures, so that costs are saved.

In the present embodiment, monitoring whether the POE transmission link between two devices is normal may be implemented by a following embodiment: triggering one device to transmit a detection message to the other device when it is determined that no Ethernet message is received by the two devices within a designated time; determining that the POE transmission link between the two devices is abnormal when it is determined that no response message from the other device with regard to the detection message is received by the device within a preset time; and determining that the POE transmission link between the two devices is normal when it is determined that a response message from the other device with regard to the detection message is received by the device within the preset time.

In the present embodiment, transmitting data between the two devices through the BPL link may be implemented by a following embodiment: determining link statuses of the two devices by means of a communication handshaking mode between the two devices; triggering the two devices to transmit data through the BPL link when it is determined that links of the two devices are both switched to the BPL link; and triggering the two devices to both switch back to the POE transmission link when it is determined that not both of the links of the two devices are switched to the BPL link. As a particular embodiment, a determining operation of the link statuses may be re-executed for the both switching back to the POE transmission link.

In the present embodiment, after transmitting data between the two devices through the BPL link, the data link backup method further includes: switching the BPL link to the POE transmission link when the two devices mutually transmit Ethernet messages through the POE transmission link, and when it is determined that the two devices both have received a response message transmitted by each other with regard to the Ethernet message.

An embodiment of the present invention further provides a first computer storage medium storing a first set of computer-executable instructions which are configured to execute the above-described data link backup method.

The present embodiment provides a power source backup method. Power is supplied through BPL. When a power source is abnormal, power is supplied through POE, and an a POE link may provide a direct-current power-supplying technology while transmitting data.

FIG. 2 is a flow diagram illustrating a power source backup method according to an embodiment of the present invention. As shown in FIG. 2, the method includes following steps (Step S202 to Step S204).

In Step S202, whether a power source of a device is normal is monitored.

In Step S204, when it is monitored that the power source is abnormal, the device is switched from BPL power supply to POE power supply, where the POE refers to a fact that direct-current power supply is provided while data are transmitted through an POE transmission link.

The present embodiment solves a problem that a traditional backup protection scheme in the related art is not conducive to cost saving and green energy saving. Power can be supplied through POE when being backed up. This power supply needs to be within a power range of POE power supply, and an existing technology can realize POE power supply within 100 W.

In the present embodiment, switching the device from the BPL power supply (power line power supply) to the POE power supply may be implemented by a following embodiment: transmitting a warning signal when it is monitored that the power source is abnormal, where the warning signal is configured to trigger switching of the power source so that the device is switched from the BPL power supply to the POE power supply.

In the present embodiment, abnormalities of the power source include at least one of: power source failure and voltage beyond a normal range.

An embodiment of the present invention further provides a second computer storage medium storing a second set of computer-executable instructions which are configured to execute the above-described power supply source backup method.

An embodiment of the present invention further provides a link and power source backup method based on an BPL technology and POE technology. The method includes the data link backup method introduced by the above-described embodiments and the power supply source backup method introduced by the above-described embodiments, where the data link backup method and the power supply source backup method are simultaneously executed.

An embodiment of the present invention further provides a third computer storage medium storing a third set of computer-executable instructions which are configured to execute the above-described link and power source backup method.

Corresponding to the link backup method provided by the above-described embodiments, the present embodiment provides a link backup device, which is configured to implement the above-described embodiments.

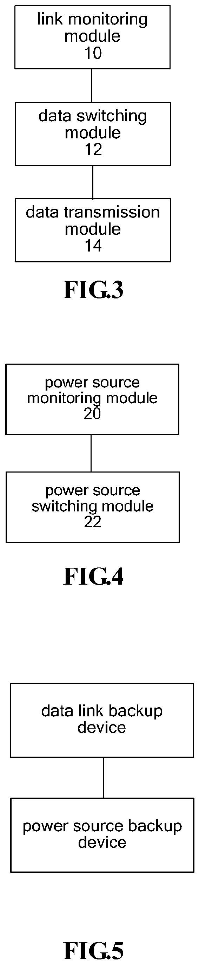

FIG. 3 is a block diagram illustrating a structure of a link backup device according to an embodiment of the present invention. As shown in FIG. 3, the device includes a link monitoring module 10, a data switching module 12 and a data transmission module 14. This structure will be described in detail below.

The link monitoring module 10 is configured to monitor whether an active POE transmission link between two devices is normal;

the data switching module 12 is connected to the link monitoring module 10 and is configured to switch the POE transmission link to a broadband over power line (BPL) link when it is monitored that the POE transmission link is abnormal; and

the data transmission module 14 is connected to the data switching module 12 and is configured to transmit data between the two devices through the BPL link.

The present embodiment solves a problem that a traditional backup protection scheme in the related art is not conducive to cost saving and green energy saving. Power can be supplied through POE when being backed up. This power supply needs to be within a power range of POE power supply, and an existing technology can realize POE power supply within 100 W. Advantageous effects of the present embodiment are mainly as follows: firstly, costs can be saved since a traditional backup protection system needs to be accomplished by two sets of devices while a backup function can be accomplished by only one set of device by utilizing embodiments of the present invention; secondly, green energy saving and environmental protection are facilitated since, obviously, energy consumption of one set of device is smaller than that of two sets of devices; and finally, it is easy to implement without re-constructing a line and other infrastructures, so that costs are saved.

The present embodiment further provides an implementation, the link monitoring module 10 includes a detection message transmission sub-module, which is configured to trigger one device to transmit a detection message to the other device when it is determined that no Ethernet message is received by the two devices within a designated time; and a determination sub-module, which is configured to determine that the POE transmission link between the two devices is abnormal when it is determined that no response message from the other device with regard to the detection message is received by the device within a preset time; and the determination sub-module is further configured to determine that the POE transmission link between the two devices is normal when it is determined that a response message from the other device is received by the device within the preset time.

The present embodiment further provides an implementation, the data transmission module 14 includes a link status determining sub-module, which is configured to determine link statuses of the two devices by means of a communication handshaking mode between the two devices; a first processing sub-module, which is configured to transmit data between the two devices through the BPL link when it is determined that links of the two devices are both switched to the BPL link; and a second processing sub-module, which is configured to trigger the two devices to both switch back to the POE transmission link and trigger the link status determining sub-module to re-execute a determining operation of the link statuses when it is determined that not both of the links of the two devices are switched to the BPL link.

The present embodiment further provides an implementation, the device further includes a link switching-back module, which is configured to switch the BPL link to the POE transmission link when the two devices mutually transmit Ethernet messages through the POE transmission link, and when it is determined that the two devices both have received a response message transmitted by each other with regard to the Ethernet message.

In an actual application, the link monitoring module 10, the data switching module 12, the data transmission module 14 and the link switching-back module may be all implemented by a central processing unit (CPU), or a digital signal processor (DSP), or a micro processor unit (MPU), or a field programmable gate array (FPGA) and the like; and the CPU, the DSP, the MPU and the FPGA may be built in a device.

Corresponding to the power source backup method described by the above-described embodiment, the present embodiment provides a power source backup device, which is configured to implement the above-described embodiment.

FIG. 4 is a block diagram illustrating a structure of a power source backup device according to an embodiment of the present invention. As shown in FIG. 4, the device includes a power source monitoring module 20 and a power source switching module 22. This structure will be described in detail below.

The power source monitoring module 20 is configured to monitor whether a power source of a device is normal; and

the power source switching module 22 is connected to the power source monitoring module 20 and is configured to switch the device from BPL power supply to active POE power supply when it is monitored that the power source is abnormal, where the POE refers to a fact that direct-current power supply is provided while data are transmitted through an POE transmission link.

The present embodiment solves a problem that a traditional backup protection scheme in the related art is not conducive to cost saving and green energy saving. Power can be supplied through POE when being backed up. This power supply needs to be within a power range of POE power supply, and an existing technology can realize POE power supply within 100 W. Advantageous effects of the present embodiment are mainly as follows: Firstly, costs can be saved since a traditional backup protection system needs to be accomplished by two sets of devices while a backup function can be accomplished by only one set of device by utilizing embodiments of the present invention; secondly, green energy saving and environmental protection are facilitated since, obviously, energy consumption of one set of device is smaller than that of two sets of devices; and finally, it is easy to implement without re-constructing a line and other infrastructures, so that costs are saved.

The present embodiment further provides an implementation, and the power source switching module 22 includes a warning sub-module, which is configured to transmit a warning signal when it is monitored that the power source is abnormal, where the warning signal is configured to trigger switching of the power source so that the device is switched from BPL power supply (power line power supply) to POE power supply.

Corresponding to the link backup and power source backup method based on an BPL technology and POE technology introduced by the above-described embodiments, the present embodiment provides a link and power source backup system based on an BPL technology and POE technology, and the system is configured to implement the above-described embodiments. FIG. 5 is a block diagram illustrating a structure of a link and power source backup system based on an BPL technology and POE technology according to an embodiment of the present invention. As shown in FIG. 5, the system includes a data link backup device and a power supply source backup device, where particular components and functions of respective portions of the data link backup device refer to the previous illustration of FIG. 3; particular components and functions of respective portions of the power source backup device refer to the previous illustration of FIG. 4, which are omitted here.

In an actual application, the power source monitoring module 20 and the power source switching module 22 may be implemented by a CPU, or a DSP, or a MPU, or a FPGA; and the CPU, the DSP, the MPU and the FPGA may be built in a device.

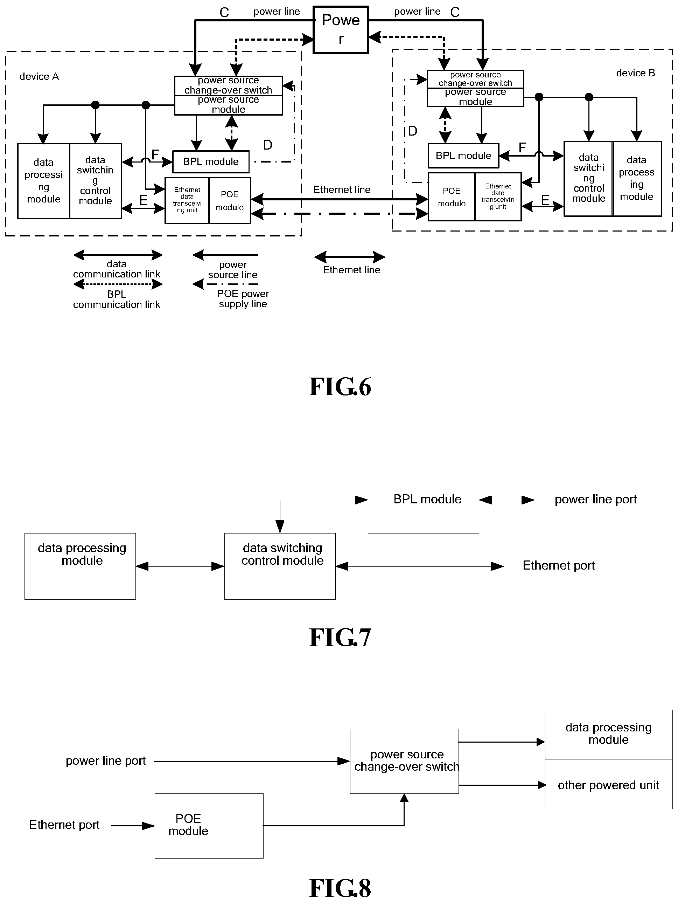

FIG. 6 is a schematic diagram illustrating a particular structure of a link and power source backup system based on an BPL technology and POE technology according to an embodiment of the present invention, and a power source and link backup protection function of a system can be implemented. Two sets of power source and backup systems of the present embodiment are completely identical in functions without a difference when a power line and a communication cable simultaneously have functions of power supply and signal transmission.

As shown in FIG. 6, device A and device B in the present embodiment are devices of a same kind, and the device internally includes an BPL module, an POE module, a power source module, a power source change-over switch, an Ethernet data transceiving unit, a data switching control module and a data processing module. Solid lines shown in FIG. 6 represent subsistent links, in which an Ethernet line is configured to transmit data, and a power line is configured to supply power; broken lines shown in FIG. 6 represent potential accesses provided when a backup protection function is used, in which a dash-and-dot line represents that a power source is provided through the Ethernet line, and a dotted line represents that data are transmitted through a power line.

Functions of various modules in the present system are as follows.

The power source change-over switch realizes detection and switching of power line power supply and POE power supply during power source backup.

The power source module realizes conversion of power source, that is, the power source of the power line or POE is converted to a power source suitable for use of a device, and is configured to provide a transmission access of an BPL signal during data communication.

The BPL module realizes modulation and demodulation functions of a power line signal.

The POE module realizes a function of POE power supply.

The Ethernet data transceiving unit realizes transmission of Ethernet data.

The data switching control module realizes control and detection functions of communication link backup.

The data processing module accomplishes processing and communication functions of Ethernet data.

Device A and device B constitute a transmission system, and are a transmitting device and a receiving device of each other. When the devices normally function, a power source and a data line both function in accordance with links in solid lines shown in the figure, and links shown with broken lines provide backup protection of the system. When the device normally functions, the power source and the communication link backed up by the system are also in a standby functioning status, and soft switching can be realized when the power source and communication link of the device normally functioning fail.

The following description will be introduced by the particular embodiment in conjunction with the above-described communication link and power source backup protection system.

### Embodiment I: a data link backup scheme

FIG. 7 is a schematic diagram illustrating realizing a link backup scheme according to an embodiment of the present invention. As shown in FIG. 7,
assuming that device A and device B are in a normal functioning process, that is, power for the devices are supplied by a power line, and data are transmitted by using Ethernet. When the data processing module of device A receives no Ethernet message transmitted by device B for a long time (a particular duration may be set according to a network condition), device A transmits to device B a detection message, which needs to be responded and replied by device B; and if device A receives no response message from device B after a certain time, device A determines that an Ethernet transmission link between device A and device B fails or is disconnected. At this point, device A and device B receive no data from each other. Meanwhile, device B also performs a same detection operation, the data switching control module switches a data link from E to F according to a backup protection rule of the data link. After the data link is switched, device A and device B firstly perform a communication handshaking to confirm a previous status and a switched status, and data are transmitted through the link F if statuses of device A and device B are confirmed to be simultaneously switched to the link F; at this point, the BPL module functions; if statuses confirmed by the handshaking are that device A uses the Ethernet link as a data transmission link and device B uses the power line as the data transmission link, device A and device B are simultaneously switched back to the original data transmission link even if the original data transmission link has a failure. Device A and device B continue to determine link status until the status is correct. If the handshaking confirms that statuses of device A and device B are identical, data on the data backup link provided by the dotted line are input to the data processing module via the data link F through the BPL module for performing data processing. To this end, backup protection of data links is realized.

In view of an existing technology, reliability of data transmitting through the BPL link is far less than that of data communicating through the Ethernet link, so that device A and device B simultaneously transmit Ethernet data detection messages while performing communication by using a backup data link; when an Ethernet link between device A and device B fails, the two devices receive no reply message from each other. When the Ethernet link is repaired, device A or device B can detect the message from each other, and simultaneously transmits a response message. Device A transmits a detection message, receives the response message from device B, and device B also has a same operation, then device A and device B transmit a request message of switching a data communication link to each other; and after a response message replied by each other is acquired, data switching control modules of device A and device B switch the communication link to the Ethernet communication link.

### Embodiment II: a power source backup scheme

FIG. 8 is a schematic diagram illustrating realizing a power source backup scheme according to an embodiment of the present invention. As shown in FIG. 8,
assuming that a power source of device B goes wrong in a normal functioning process of device A and device B, for instance, power failure or overlow voltage (there is a detection circuit in a power source module, and the power source is normal if the voltage is within a certain range, and an alarm is given if the voltage exceeds this range), the power source module has a function of detecting a power source of a device, and warning information is transmitted to the data processing module when it is detected that power supplied to device B by device C exceeds a normal range; and a warning signal simultaneously triggers the power source change-over switch to switch the power source, and the power supply of the power source module in device B would be switched to a power source provided by device D from a power source provided by device C. The power source module has a power supply maintaining function, the power source can be normally output within a 20ms time during power source interruption, and a switching operation of the power source is required to be accomplished within 20ms, so as to guarantee continuity of the power supply, and realize soft switching of the power source, so that the devices realize backup protection of the power source. The POE technology has been maturely applied, and the power source may be supplied all the time by using POE.

### Embodiment III: a simultaneous power source and data link backup scheme

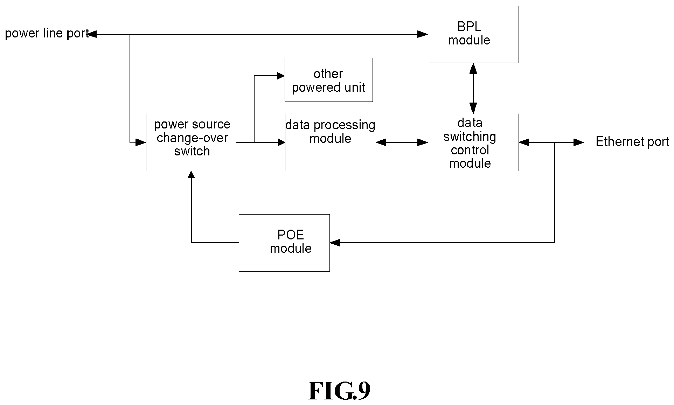

FIG. 9 is a schematic diagram illustrating realizing a power source and data link simultaneous backup scheme according to an embodiment of the present invention. As shown in FIG. 9, the embodiment of the present invention can realize that a data link and a power source of a device simultaneously achieve switching backup protection, that is, a comprehensive backup scheme of embodiment I and embodiment II.

In the embodiment of the present invention, an BPL technology and POE technology are combined to provide a brand-new backup protection solution for a power source and a data transmission link. By employing the power source and data link backup system formed based on the broadband over power line and the POE technology described in the embodiment of the present invention, firstly, costs can be saved since a traditional backup protection system needs to be accomplished by two sets of devices while a backup function can be accomplished by only one set of device by utilizing embodiments of the present invention; secondly, green energy saving and environmental protection are facilitated since, obviously, energy consumption of one set of device is smaller than that of two sets of devices; and finally, it is easy to implement without re-constructing a line and other infrastructures, so that costs are saved.

While embodiments of the present invention have been disclosed for illustrative purposes, those skilled in the art will recognize that various modifications, additions and substitutions are possible, and accordingly the scope of the present disclosure should not be limited to the above-described embodiments.

It will be appreciated by those skilled in the art that embodiments of the present invention may be provided as a method, system, or computer program product. Thus, the present disclosure may take the form of a hardware embodiment, a software embodiment, or an embodiment combining software and hardware aspects. Moreover, the present disclosure may take the form of a computer program product implemented on one or more computer usable storage medium (including but not limited to a magnetic disk memory and an optical memory, etc.) containing computer usable program codes there.

The present disclosure is described with reference to flow diagrams and/or block diagrams of method, device (system), and computer program products according to an embodiment of the present invention. It is to be understood that each process and/or block in the flow diagrams and/or the block diagrams, as well as combinations of the flows and/or the blocks in the flow diagrams and/or the block diagrams may be implemented by computer program instructions. These computer program instructions may be provided to a processor of a general purpose computer, a special purpose computer, an embedded processor, or other programmable data processing device to produce a machine such that instructions executed by a processor of the computer or other programmable data processing device produces a means for implementing the functions specified in one or more flows of the flow diagrams and/or one or more blocks of the block diagrams.

These computer program instructions may also be stored in a computer readable memory capable of directing a computer or other programmable data processing device to operate in a specific manner such that the instructions stored in the computer readable memory produce an article of manufacture comprising an instruction means, and the instruction means implements a function specified in one or more flows of the flow diagrams and/or one or more blocks of the block diagrams.

These computer program instructions may also be loaded onto the computer or other programmable data processing device such that a series of operational steps are performed on the computer or other programmable device to produce computer-implemented processing, and thus instructions executed on the computer or other programmable device provide the steps for implementing the functions specified in one or more flows of flow diagrams and/or one or more blocks of block diagrams.

The above description is only for embodiments of the present invention and is not intended to limit a protective scope of the present disclosure.

## Claims

1. A link backup method, comprising:
monitoring (S102) whether an active power over Ethernet POE transmission link between two devices is normal;
switching (S104) the POE transmission link to a broadband over power line (BPL) link when it is monitored that the POE transmission link is abnormal; and
transmitting (S106) data between the two devices through the BPL link;
wherein the monitoring (S102) whether the POE transmission link between two devices is normal comprises:
triggering one device to transmit a detection message to another device when it is determined that no Ethernet message is received by the two devices within a designated time;
determining that the POE transmission link between the two devices is abnormal when it is determined that no response message from the other device is received by the device within a preset time, wherein the response message is a reply for the detection message; and
determining that the POE transmission link between the two devices is normal when it is determined that a response message from the other device is received by the device within the preset time.

2. The method according to claim 1, wherein the transmitting (S106) data between the two devices through the BPL link, comprises:
determining link statuses of the two devices by means of a communication handshaking mode between the two devices;
transmitting data through the BPL link when it is determined that links of the two devices are both switched to the BPL link; and
triggering the two devices to both switch back to the POE transmission link to re-execute a determining operation of the link statuses when it is determined that not both of the links of the two devices are switched to the BPL link.

3. The method according to claim 1, further comprising, after transmitting (S102) data between the two devices through the BPL link :
switching the BPL link to the POE transmission link when the two devices mutually transmit Ethernet messages through the POE transmission link, and when it is determined that the two devices both have received a response message transmitted by each other.

4. A link backup device, comprising:
a link monitoring module (10), which is configured to monitor whether an active POE transmission link between two devices is normal;
a data switching module (12), which is configured to switch the POE transmission link to a broadband over power line (BPL) link when it is monitored that the POE transmission link is abnormal; and
a data transmission module (14), which is configured to transmit data between the two devices through the BPL link;
wherein the link monitoring module (10) comprises:
a detection message transmission sub-module, which is configured to trigger one device to transmit a detection message to another device when it is determined that no Ethernet message is received by the two devices within a designated time, wherein the response message is a reply for the detection message; and
a determination sub-module, which is configured to determine that the POE transmission link between the two devices is abnormal when it is determined that no response message from the other device is received by the device within a preset time; and
the determination sub-module is further configured to determine that the POE transmission link between the two devices is normal when it is determined that a response message from the other device is received by the device within the preset time.

5. The device according to claim 4, wherein the data transmission module (14) comprises:
a link status determining sub-module, which is configured to determine link statuses of the two devices by means of a communication handshaking mode between the two devices;
a first processing sub-module, which is configured to transmit data through the BPL link when it is determined that links of the two devices are both switched to the BPL link; and
a second processing sub-module, which is configured to trigger the two devices to both switch back to the POE transmission link to trigger the link status determining sub-module to re-execute a determining operation of the link statuses when it is determined that not both of the links of the two devices are switched to the BPL link.

6. The device according to claim 4, further comprising:
a link switching-back module, which is configured to switch the BPL link to the POE transmission link when the two devices mutually transmit Ethernet messages through the POE transmission link, and when it is determined that the two devices both have received a response message transmitted by each other.

7. A computer storage medium storing a first set of computer-executable instructions for executing the link backup method according to any of claims 1 to 3.

## Patentansprüche

1. Verbindungssicherungsverfahren, umfassend:
Überwachen (S102), ob eine aktive Power-over-Ethernet-POE-Übertragungsverbindung zwischen zwei Vorrichtungen normal ist;
Schalten (S104) der POE- Übertragungsverbindung auf eine Broadband-over-Power-Line-Verbindung (BPL), wenn überwacht wird, dass die POE-Übertragungsverbindung abnormal ist; und
Übertragen (S106) von Daten zwischen den zwei Vorrichtungen durch die BPL-Verbindung;
wobei das Überwachen (S102), ob die POE-Übertragungsverbindung zwischen zwei Vorrichtungen normal ist, Folgendes umfasst:
Auslösen der Übertragung einer Feststellungsnachricht von einer Vorrichtung zu einer anderen Vorrichtung, wenn bestimmt wird, dass keine Ethernet-Nachricht innerhalb einer bezeichneten Zeit durch die zwei Vorrichtungen empfangen wird;
Bestimmen, dass die POE-Übertragungsverbindung zwischen den zwei Vorrichtungen abnormal ist, wenn bestimmt wird, dass innerhalb einer voreingestellten Zeit keine Reaktionsnachricht von der anderen Vorrichtung durch die Vorrichtung empfangen wird, wobei die Reaktionsnachricht eine Antwort auf die Feststellungsnachricht ist; und
Bestimmen, dass die POE-Übertragungsverbindung zwischen den zwei Vorrichtungen normal ist, wenn bestimmt wird, dass innerhalb der voreingestellten Zeit durch die Vorrichtung eine Reaktionsnachricht von der anderen Vorrichtung empfangen wird.

2. Verfahren nach Anspruch 1, wobei das Übertragen (S106) von Daten zwischen den zwei Vorrichtungen durch die BPL-Verbindung Folgendes umfasst:
Bestimmen von Verbindungszuständen von den zwei Vorrichtungen mittels eines Kommunikations-Handshaking-Modus zwischen den zwei Vorrichtungen;
Übertragen von Daten durch die BPL-Verbindung, wenn bestimmt wird, dass Verbindungen der zwei Vorrichtungen beide auf die BPL-Verbindung umgeschaltet sind; und
Auslösen des Zurückschaltens beider von den zwei Vorrichtungen auf die POE-Übertragungsverbindung, um einen Bestimmungsvorgang der Verbindungszustände erneut auszuführen, wenn bestimmt wird, dass nicht beide von den Verbindungen der zwei Vorrichtungen auf die BPL-Verbindung geschaltet sind.

3. Verfahren nach Anspruch 1, das ferner nach dem Übertragen (S102) von Daten zwischen den zwei Vorrichtungen durch die BPL-Verbindung Folgendes umfasst:
Schalten der BPL-Verbindung auf die POE-Übertragungsverbindung, wenn die zwei Vorrichtungen gegenseitig Ethernet-Nachrichten durch die POE-Übertragungsverbindung übertragen und wenn bestimmt wird, dass die zwei Vorrichtungen beide eine voneinander übertragene Reaktionsnachricht empfangen haben.

4. Verbindungssicherungsvorrichtung, umfassend:
ein Verbindungsüberwachungsmodul (10), das ausgestaltet ist, um zu überwachen, ob eine aktive POE-Übertragungsverbindung zwischen zwei Vorrichtungen normal ist;
ein Datenschaltmodul (12), das ausgestaltet ist, die POE-Übertragungsverbindung auf eine Broadband-over-Power-Line-Verbindung (BPL) zu schalten, wenn überwacht wird, dass die POE-Übertragungsverbindung abnormal ist; und
ein Datenübertragungsmodul (14), das ausgestaltet ist, um Daten zwischen den zwei Vorrichtungen durch die BPL-Verbindung zu übertragen;
wobei das Verbindungsüberwachungsmodul (10) Folgendes umfasst:
ein Feststellungsnachricht-Übertragungsuntermodul, das ausgestaltet ist, um die Übertragung einer Feststellungsnachricht von einer Vorrichtung zu einer anderen Vorrichtung auszulösen, wenn bestimmt wird, dass keine Ethernet-Nachricht innerhalb einer bezeichneten Zeit durch die zwei Vorrichtungen empfangen wird, wobei die Reaktionsnachricht eine Antwort auf die Feststellungsnachricht ist; und
ein Bestimmungsuntermodul, das ausgestaltet ist, um zu bestimmen, dass die POE-Übertragungsverbindung zwischen den zwei Vorrichtungen abnormal ist, wenn bestimmt wird, dass innerhalb einer voreingestellten Zeit durch die Vorrichtung keine Reaktionsnachricht von der anderen Vorrichtung empfangen wird; und
das Bestimmungsuntermodul ferner ausgestaltet ist, um zu bestimmen, dass die POE-Übertragungsverbindung zwischen den zwei Vorrichtungen normal ist, wenn bestimmt wird, dass innerhalb der voreingestellten Zeit durch die Vorrichtung eine Reaktionsnachricht von der anderen Vorrichtung empfangen wird.

5. Vorrichtung nach Anspruch 4, wobei das Datenübertragungsmodul (14) Folgendes umfasst:
ein Verbindungszustandsbestimmungsuntermodul, das ausgestaltet ist, um Verbindungszustände von den zwei Vorrichtungen mittels eines Kommunikations-Handshaking-Modus zwischen den zwei Vorrichtungen zu bestimmen;
ein erstes Verarbeitungsuntermodul, das ausgestaltet ist, um Daten durch die BPL-Verbindung zu übertragen, wenn bestimmt wird, dass Verbindungen der zwei Vorrichtungen beide auf die BPL-Verbindungen geschaltet sind; und
ein zweites Verarbeitungsuntermodul, das ausgestaltet ist, um auszulösen, dass die zwei Vorrichtungen beide zur POE-Übertragungsverbindung zurückschalten, um das erneute Ausführen eines Bestimmungsvorgangs der Verbindungszustände durch das Verbindungszustandsbestimmungsuntermodul auszulösen, wenn bestimmt wird, dass nicht beide von den Verbindungen der zwei Vorrichtungen auf die BPL-Verbindung geschaltet sind.

6. Vorrichtung nach Anspruch 4, ferner umfassend:
ein Verbindungsrückschaltmodul, das ausgestaltet ist, um die BPL-Verbindung zur POE-Übertragungsverbindung zu schalten, wenn die zwei Vorrichtungen gegenseitig Ethernet-Nachrichten durch die POE-Übertragungsverbindung übertragen und wenn bestimmt wird, dass die zwei Vorrichtungen beide eine voneinander übertragene Reaktionsnachricht empfangen haben.

7. Rechnerspeichermedium, das eine erste Menge von durch Rechner ausführbaren Befehlen zum Ausführen des Verbindungssicherungsverfahrens nach einem der Ansprüche 1 bis 3 speichert.

## Revendications

1. Procédé de sauvegarde de liaison, comprenant :
la surveillance (S102) si une liaison active de transmission POE de puissance sur Ethernet entre deux dispositifs est normale ;
la commutation (S104) de la liaison de transmission POE vers une liaison BPL large bande sur ligne de puissance lorsqu'il est surveillé que la liaison de transmission POE est anormale ; et
la transmission (S106) de données entre les deux dispositifs par le biais de la liaison BPL ;
dans lequel la surveillance (S102) si la liaison de transmission POE entre deux dispositifs est normale comprend :
le déclenchement d'un dispositif afin de transmettre un message de détection à un autre dispositif lorsqu'il est déterminé qu'aucun message Ethernet n'est reçu par les deux dispositifs pendant une durée désignée ;
la détermination que la liaison de transmission POE entre les deux dispositifs est anormale lorsqu'il est déterminé qu'aucun message de réponse de l'autre dispositif n'est reçu par le dispositif pendant une durée prédéterminée, dans lequel le message de réponse est une réponse au message de détection ; et
la détermination que la liaison de transmission POE entre les deux dispositifs est normale lorsqu'il est déterminé qu'un message de réponse de l'autre dispositif est reçu par le dispositif pendant la durée prédéterminée.

2. Procédé selon la revendication 1, dans lequel la transmission (S106) de données entre les deux dispositifs par le biais de la liaison BPL comprend :
la détermination des statuts de liaison des deux dispositifs à l'aide d'un mode de handshaking de communication entre les deux dispositifs ;
la transmission de données par le biais de la liaison BPL lorsqu'il est déterminé que les liaisons des deux dispositifs sont toutes les deux commutées vers la liaison BPL ; et
le déclenchement des deux dispositifs afin de revenir à la liaison de transmission POE de façon à ré-exécuter une opération de détermination des statuts de liaison lorsqu'il est déterminé que les liaisons des deux dispositifs n'ont pas été toutes les deux commutées vers la liaison BPL.

3. Procédé selon la revendication 1, comprenant en outre, après la transmission (S102) de données entre les deux dispositifs par le biais de la liaison BPL :
la commutation de la liaison BPL vers la liaison de transmission POE lorsque les deux dispositifs transmettent mutuellement des messages Ethernet par le biais de la liaison de transmission POE, et lorsqu'il est déterminé que les deux dispositifs ont tous les deux reçu un message de réponse transmis par l'un à l'autre.

4. Dispositif de sauvegarde de liaison, comprenant :
un module de surveillance de liaison (10), qui est configuré pour surveiller si une liaison de transmission POE active entre deux dispositifs est normale ;
un module de commutation de données (12), qui est configuré pour commuter la liaison de transmission POE vers une liaison BPL large bande sur ligne de puissance lorsqu'il est surveillé que la liaison de transmission POE est anormale ; et
un module de transmission de données (14), qui est configuré pour transmettre des données entre les deux dispositifs par le biais de la liaison BPL ;
dans lequel le module de surveillance de liaison (10) comprend :
un sous-module de transmission de message de détection, qui est configuré pour déclencher un dispositif afin de transmettre un message de détection à un autre dispositif lorsqu'il est déterminé qu'aucun message Ethernet n'est reçu par les deux dispositifs pendant une durée désignée, dans lequel le message de réponse est une réponse au message de détection ; et
un sous-module de détermination, qui est configuré pour déterminer que la liaison de transmission POE entre les deux dispositifs est anormale lorsqu'il est déterminé qu'aucun message de réponse de l'autre dispositif n'est reçu par le dispositif pendant une durée prédéfinie ; et
le sous-module de détermination est en outre configuré pour déterminer que la liaison de transmission POE entre les deux dispositifs est normale lorsqu'il est déterminé qu'un message de réponse de l'autre dispositif est reçu par le dispositif pendant la durée prédéfinie.

5. Procédé selon la revendication 4, dans lequel le module de transmission de données (14) comprend :
un sous-module de détermination de statut de liaison, qui est configuré pour déterminer les statuts de liaison des deux dispositifs à l'aide d'un mode de handshaking de communication entre les deux dispositifs ;
un premier sous-module de traitement, qui est configuré pour transmettre des données par le biais de la liaison BPL lorsqu'il est déterminé que les liaisons des deux dispositifs sont commutées toutes les deux vers la liaison BPL ; et
un second sous-module de traitement, qui est configuré pour déclencher les deux dispositifs afin de revenir à la liaison de transmission POE de façon à déclencher le sous-module de détermination de statut de liaison de façon à ré-exécuter une opération de détermination des statuts de liaison lorsqu'il est déterminé que les liaisons des deux dispositifs ne sont pas commutées toutes les deux vers la liaison BPL.

6. Procédé selon la revendication 4, comprenant en outre :
un module de retournement de liaison, qui est configuré pour commuter la liaison BPL vers la liaison de transmission POE lorsque les deux dispositifs transmettent mutuellement des messages Ethernet par le biais de la liaison de transmission POE, et lorsqu'il est déterminé que les deux dispositifs ont tous les deux reçu un message de réponse transmis par l'un à l'autre.

7. Support de stockage informatique qui stocke un premier ensemble d'instructions exécutables par un ordinateur destinées à exécuter le procédé de sauvegarde de liaison selon l'une quelconque des revendications 1 à 3.
